# EUROPEAN PATENT SPECIFICATION

(11) **EP 3 581 832 B1**
(45) Date of publication and mention of the grant of the patent: **11.05.2022**
(21) Application number: 18185593.3
(22) Date of filing: 25.07.2018
(51) Int. Cl.: F16J 15/06, B29C 48/25

(54) **GLAND PACKING SYSTEM**
STOPFBUCHSENPACKUNGSSYSTEM
SYSTÈME DE CONDITIONNEMENT DE BAGUE

(30) Priority: 13.06.2018 TR 201808435
(43) Date of publication of application: 18.12.2019
(73) Proprietor: Petkim Petrokimya Holding Anonim Sirekti, 35801 Izmir (TR)
(72) Inventor: KORDALI, YAVUZ BURAK, IZMIR (TR); CETINEL, YALCIN, IZMIR (TR)
(74) Representative: Sevinç, Cenk

(56) References cited:
- DE-A1- 2 145 830
- DE-A1- 19 959 856
- US-A- 2 522 365

## Description

### Relevant Technical Field

The present invention relates to mechanical couplings that allow flowing of fluids/semi fluids through and that are used for ensuring sealing between moving and stationary parts.

### State of the Art

Extrusion (Extruder) in general, are systems that carry out mechanical compaction and melting of plastic through vapor. Extruder system comprises screw, gland, transmission, gear pair, resistor and motor for melting, mixing and pushing of the raw material within the system inside a die for giving the raw material a final desired shape. Heating of raw materials within extruder systems is achieved by running high temperature fluid/semi fluid and preferably vapor through the packing.

From US 2,522,365 A, in order to melt the plastic in an extruder, it is known to have a heat transfer fluid running through an exchanger pipe disposed in a groove of an extruder element.

In order to prevent material and vapor used for heating from melding to one another a packing is utilized during the heating of plastic. By means of packings positioned between two machine parts of which one moving and one stationary heating of raw material through vapor is achieved during the compaction and shaping of raw material.

The most essential matter in shaping of plastic is heating through gland and rendering it into molten. Components having the most crucial and direct impact upon the molten quality, homogeneity and the quality of the product to be yielded through this molten are always the gland packing and the design of the screw. In terms of plastic quality, 80% of problems originating from the molten are arising out of faulty design of the gland and screw groups or melding of vapor that is responsible for the task of heating within the gland as a consequence of gland abrasion.

Ensuring the sealing between moving parts, despite not being effortless all the time, is contingent on characteristics such as design of the gland packing, cleanness of the pivot and housing in addition to velocity, pressure, temperature and chemical characteristics of medium fluid. Besides these, however, fractures/punctures resultant of corrosion caused by the friction of the moving part that comes into contact with packing cause fluid/semi fluid running through the packing to get mixed in the system and damages the raw material. One of the major reasons why fluids/semi fluids within packings that are used in the state of the art seep into the system is the design of packings used, namely their geometrical figure. In packings used in existing extruder systems superheated vapor is directly transmitted through fluid/semi fluid channel located within the gland packing. Abovementioned fluid channel in the state of the art, by means of a gap, cavity constituted within the gland packing fluid/semi fluid with high temperature within the channel is transmitted for the purpose of heating/melting in order to shape the raw material within the system. However, abovementioned fluid channel which fluid/semi fluid with high temperature will run through assumes an angled structure during production so that it will be compatible with geometrical shape of the gland packing. Durability of each corner of abovementioned angled fluid channel is feebler when compared to its edges. Since the rapid abrasion of corners with low durability over time is in question, puncturing/abrasion of these corners causes fluid/semi fluid running through the gland packing used within the extruder system to get out of gland packing and to seep into the system. In the event that the raw material to be shaped comes into direct contact with heating fluid/semi fluid, it causes the planned product to be faulty and thereby causes a disruption in the entire process. While anticipation towards these potential leaks in channel structures comprising feeble corners through which fluid/semi fluid shall run within the existing cavity is out of the question, a solution towards plugging in prevention of these leaks is currently unavailable.

In extruder structuring and during idling or closure in particular, friction of the main gear pivot and the gland to one another and potential abrasion thereby is one of the most commonly observed problems in these systems. Abrasion of the gland due to friction and hence abrasion causes gland to puncture which results in seeping of fluid/semi fluid inside the gland into the system.

The patent application bearing the number of WO2006124469 in the state of the art is provided in prevention of leaks in gland packings within turbine seal system. The turbine seal system entraps working fluid leaking from a closed loop thermodynamic cycle system, condenses this entrapped working fluid and then returns the condensed working fluid to the thermodynamic cycle system. Abovementioned turbine seal system is configured for the application of nitrogen or other non-condensable materials or other materials to entrap or mix with the leaking working fluid. The combined mixture of the nitrogen used in order to entrap the working fluid and the working fluid leaking from the turbine is discharged by an exhaust compressor that preserves a desired amount of vacuum within gland packing seal portion of the turbine seal. This combined mixture can later be directed to a condenser for the condensing of the working fluid vapor and discharging non-condensable materials by constituting a working stream. Thermodynamic cycle system is utilized within the subject matter invention of preventing vapor leakage from gland packing.

Another system proposed in the state of the art within the application bearing the number of US4827962A provided solutions towards preventing fluid and vapor leaks in the invention with the subject matter of safety valve. In cases where fluid/semi fluid systems are utilized in any fields of technology, certain precautions were taken in order to prevent these fluids/semi fluids from seeping or leaking into the system.

By means of the proposed novel structure solutions were generated for existing problems in preventing high temperature fluid/semi fluid used for heating and shaping of the plastic from seeping into the extruder system and in achieving both production continuity and energy saving particularly in extruder systems.

### Objects of the Invention

Object of the present invention is to prevent fluid/semi fluid that flows in contact with gland packing through a channel constituted within gland packing for heating of raw materials from seeping into the extruder system due to abrasion/puncturing of packings used in extruder systems.

It is thus an object of this invention to prevent fluid/semi fluid that flows through the gland packing for heating of raw materials from seeping into the system through feeble regions stemming from the design and geometrical shape of the gland packings used in extruder systems.

It is therefore an object of this invention to prevent potential leaks into the system arising as a consequence of the abrasion of gland packing manufactured from carbon steel material due to flowing of fluid/semi fluid directly through the gland packing for heating of raw materials.

It is thus another object of this invention by means of the constituted novel system drifting fluid/semi fluid apart from packing and gland packing and thereby preventing leaks into extruder system.

It is therefore an objective of this invention to prevent easily occurring abrasions/punctures by disposing regions with low durability within the channel structure that runs through the packing.

It is thus an object of this invention to constitute a secondary protective structure to serve as a plugging in the event of an unanticipated puncture or abrasion within the novel system and thereby preventing halting of the production due to potential malfunctions within extruder system.

### Description of the Figures

Figure 1 illustrates the external view of gland packing with exchanger pipe.
Figure 2 illustrates the pipe and the O-ring within the channel system inside gland packing.
Figure 3 illustrates the sectional view of the channel system within gland packing.

### References

- 100.: gland packing
- 101.: O-ring
- 102.: channel
- 103.: gland packing roof
- 104.: gland packing base
- 105.: informant outlet
- 200.: exchanger pipe
- 201.: coupling half

### Disclosure of the Invention

The present invention relates to a novelty brought into gland packing (100) used in melting process, self-generated friction that plastic creates by jamming itself between gland packing (100) and shaft and heat provided by plastic materials to gland packing (100) in extruder systems.

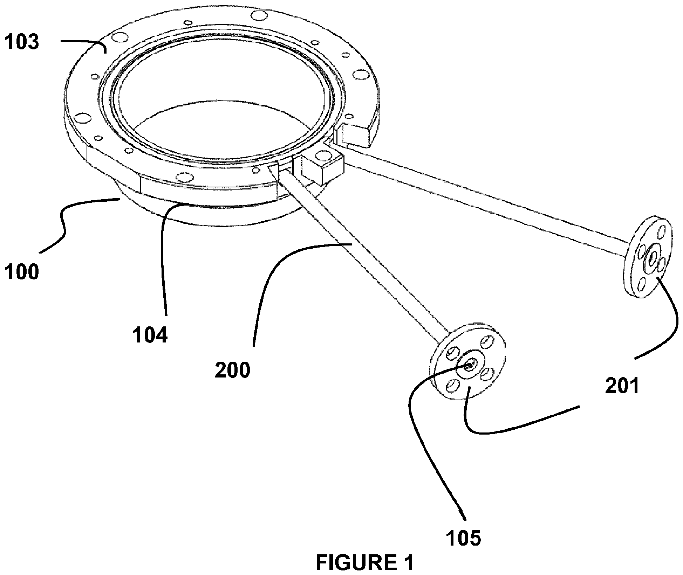

Subject matter invention gland packing (100) is illustrated in Figure 1. A channel (102) system through which a fluid/semi fluid with a temperature that will melt the plastic will flow for the purpose of melting the plastic between the shaft and gland packing (100) that will apply pressure to packing is constituted. By means of this channel (102) system occurring of any potential leaks and escapes into the system is precluded by accomplishing the flow of high temperature fluid/semi fluid to be used in melting of plastic entirely within this channel (102) through an exchanger pipe (200) with cylindrical structure and retaining it herein. Free and rapid circulation of fluid/semi fluid within gland packing (100) by running this high temperature fluid/semi fluid through cylindrical exchanger pipe (200) that will melt the plastic and because it does not comprise any welding or joints no obstructing structures are left on the flow path of fluid/semi fluid, and by disposing these points with low durability punctures/abrasions are precluded.

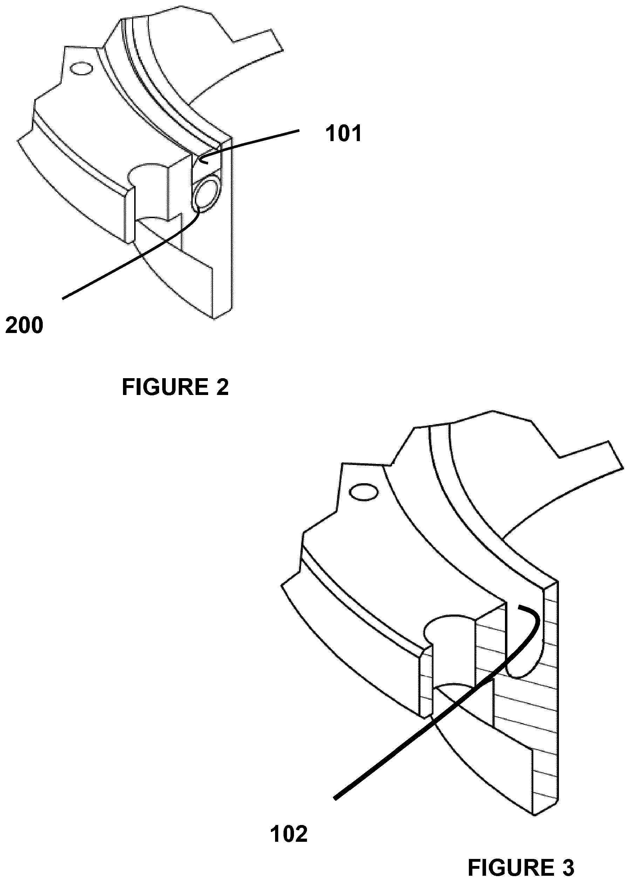

Details of channel (102) system constituted within the subject matter invention gland packing (100) are illustrated in Figures 2 and 3. Channel (102) system within gland packing (100) is of perpetually lasting form along gland packing (100) and is the hollow structure in "U" form that starts from gland packing roof (103) and that reaches out towards gland packing base (104) however, that comes to an end before it slopes down entirely toward gland packing base (104). Exchanger pipe (200) is run through the channel system in a such a way that it will be compatible with the rounded channel (102) base of abovementioned "U" form. Exchanger pipe (200) compatibly continues along channel (102) system within gland packing (100) with the geometrical structure of gland packing (100). Coupling half (201) is mounted on legs of exchanger pipe in order to conduct in and outflows of fluid/semi fluid that will run through the straight formed leg portions of exchanger pipe (200) that remains outside of gland packing (100).

In order to prevent any leaks that may seep into the system as a result of abrasion/puncture of exchanger pipe (200) which is positioned inside gland packing (100), getting damaged due to the movement of packing and its shaft or any other external factors, O-ring (101) that is compatible with channel (102) structure constituted within exchanger pipe (200) and gland packing (100) is inserted to channel (102) in such a way that it will overlap with exchanger pipe (200) which is fixedly positioned within channel (102).

Depth of channel (102) constituted within gland packing (100) is equal to sum of proportions belonging to O-ring (101) which is overspread to exchanger pipe (200) and herewith channel (102) is closed up to gland packing roof (103) pursuant to overspreading of O-ring (101) to exchanger pipe (200). While exchanger pipe (200) and O-ring (101) within the subject matter invention gland packing (100) is mounted in a way that they will remain inside channel (102), this aforesaid mounting is preferably combining by welding.

O-ring (101) which will be positioned over exchanger pipe (200) can be of the same cylindrical structure or can have a different geometrical form. Exchanger pipe (100) through which fluid/semi fluid will flow pursuant to the mounting of O-ring (101) assumes a task of plugging that enables fluid/semi fluid to remain inside channel (102) without escaping to the system and to maintain its flow in the event that gland packing (100) may suffer damage or get punctured as a consequence of a foreign unwanted force/impact. By this means a two-stage preventive solution is provided in inhibiting of a leak that may occur within the system and in continuously proceeding of the production.

By means of exchanger pipe (200) and O-ring (101) within channel (102) system constituted inside gland packing (100) at least one informant outlet (105) that will allow leaks to be noticed is positioned on the outer surface of coupling half (201) that is located at the tips of legs belonging to exchanger pipe (200) in the event of a leak of fluid/semi fluid that enables the expansion of plastic by heating and that eliminates the friction to shaft of which it runs through into the system due to a puncture occurred both on O-ring (101) and on exchanger pipe (200) as a consequence of a powerful impact or abrasion.

The subject matter gland packing (100) will be manufactured by means of machining and exchanger pipe (200) that will be inserted to channel (102) constituted within gland packing (100) will be rendered compatible with the geometrical shape of gland packing (100) by means of being cut in appropriate proportions. Coupling halves (201) are mounted to in and outflows of exchanger pipe (200) pursuant to running of exchanger pipe (200) through channel (102) within gland packing (100). Following these processes, 0-ring (102) is placed upon exchanger pipe (200) within channel (102) and exchanger pipe (200) and O-ring (102) are mounted in such a way that they will not come into view in the surface of gland packing.

By means of the invention described above accomplishing of fluid/semi fluid circulation used for heating within exchanger pipe freely (200) and precluding of leaks occurring in available systems are achieved.

## Claims

1. Gland packing (100) used in order to ensure the expansion of plastic through heating and to eliminate friction towards shaft that it runs through in extruder systems, comprising an **exchanger pipe (200)** having a cylindrical structure through which fluid/semi fluid may continually flow at a temperature that can melt the plastic, **coupling half (201)** mounted on legs of said exchanger pipe (200) in order to conduct in and outflows of fluid/semi fluid that will run through the straight formed leg portions of exchanger pipe (200) that remains outside of gland packing (100), at least one **informant outlet (105)** positioned on the outer surface of said coupling half (201) and that allows leaks to be noticed in the event of leak of high temperature fluid/semi fluid that is used for melting of plastic by means of exchanger pipe (200) and O-ring (101) within channel (102) system, seeping into the system due to a puncture occurred both on O-ring (101) and on exchanger pipe (100) as a consequence of a powerful impact or abrasion, **a channel (102)** bearing to the **exchanger pipe (200)** and where the exchanger pipe (200) is located inside of channel (102), and wherein said channel is of a perpetually lasting form along the gland packing (100) and has a hollow structure in "U" form that starts from gland packing roof (103) and that reaches out towards gland packing base (104) however that comes to an end before it slopes down entirely toward gland packing base (104),and **O-ring (101)** which is positioned inside the channel (102) such that it covers the exchanger pipe (200) fixedly positioned inside the channel (102) located in a covering manner on top of exchanger pipe (200) which is positioned inside channel (102), and that has a structure that is compatible with the structure of the channel (102) in order to preclude any leaks into the system that may occur as a consequence of abrasion/puncture of the exchanger pipe (200) getting damaged due to movement of packing and its shaft and any other external factors.

## Patentansprüche

1. Stopfbuchsenpackung (100), die verwendet wird, um die Ausdehnung des Kunststoffs durch Erhitzung zu sichern und die Reibung gegenüber dem Schaft zu vermeiden, durch den er in Extrudersystemen läuft, umfassend **ein Wärmetauscherrohr (200)** mit
eine zylindrische Struktur, durch die eine Flüssigkeit/Halbflüssigkeit mit einer Temperatur, die den Kunststoff schmelzen kann, kontinuierlich fließen kann, **Kupplungshälfte (201),** die an den Schenkeln des Wärmetauscherrohrs (200) montiert ist, um den Zufluss und den Abfluss von Flüssigkeit/Halbflüssigkeit zu leiten, die durch die gerade geformten Schenkelabschnitte des Wärmetauscherrohrs (200) fließt, das außerhalb der Stopfbuchsenpackung (100) bleibt,
mindestens **einen Informantenauslass (105),** der an der Außenfläche der Kupplungshälfte (201) positioniert ist und der es ermöglicht, dass Leckagen im Falle einer Leckage einer Hochtemperaturflüssigkeit/Halbflüssigkeit, die zum Schmelzen von Kunststoff mittels des Wärmetauscherrohrs (200) und des O-Rings (101) innerhalb des Kanalsystems (102) verwendet wird, bemerkt werden, die in das System aufgrund einer Punktur sowohl des O-Rings (101) als auch des Wärmetauscherrohrs (100) als Folge eines starken Stoßes oder Abriebs eindringt, **einen Kanal (102),**
der **das Wärmetauscherrohr (200)** lagert, und wo das Wärmetauscherrohr (200) im Inneren des Kanals (102) liegt , und wobei der genannte Kanal eine fortdauernde Form entlang der Stopfbuchsenpackung (100) hat und eine hohle Struktur in U-Form aufweist, die vom Stopfbuchsendach (103) ausgeht und sich zur Stopfbuchsenbasis (104) hin erstreckt, jedoch endet, bevor sie vollständig zur Stopfbuchenbasis (104) hin abfällt, und **einen O-Ring (101),** der im Inneren des Kanals (102) positioniert ist, so dass er das fest im Inneren des Kanals (102) positionierte Wärmetauscherrohr (200) abdeckt, das sich abdeckend auf der Oberseite des Wärmetauscherrohrs (200) befindet, das im Inneren des Kanals (102) positioniert ist, und der eine Struktur aufweist, die mit der Struktur des Kanals (102) kompatibel ist, um etwaige Leckagen in das System auszuschließen, die als Folge von Abrieb/Punktur des Wärmetauscherrohrs (200) auftreten können, das aufgrund der Bewegung der Packung und seines Shaft und anderer externer Faktoren beschädigt wird.

## Revendications

1. Gland de presse-étoupe (100) utilisé pour assurer l'expansion du plastique par chauffage et pour éliminer le frottement vers l'arbre qu'il traverse dans les systèmes d'extrusion, comprenant un **tuyau échangeur (200)** ayant
une structure cylindrique à travers laquelle le fluide/semi fluide peut s'écouler en continu à une température pouvant faire fondre le plastique, un **demi-accouplement (201)** monté sur des pieds dudit tuyau échangeur (200) pour conduire les entrées et les sorties de fluide/semi fluide qui s'écoulera à travers les parties de pied formées droites du tuyau d'échangeur (200) qui reste à l'extérieur du gland de presse-étoupe (100),
au moins une **sortie informateur (105)** positionnée sur la surface extérieure dudit demi-accouplement (201) et qui permet de détecter des fuites en cas de fuite de fluide/semi-fluide à haute température qui est utilisée pour la fusion de plastique au moyen d'un tuyau échangeur (200) et joint torique (101) à l'intérieur du système de canal (102), s'infiltrant dans le système due à une crevaison produite à la fois sur le joint torique (101) et sur le tuyau échangeur (100) à la suite d'un impact puissant ou d'une abrasion, **un canal**
**(102)** prenant appui sur le **tuyau échangeur (200)** et où le tuyau échangeur (200) est situé à l'intérieur du canal (102), et dans lequel ledit canal est une forme perpétuellement durable le long du gland presse-étoupe (100) et a une structure creuse en forme de "U" qui part du toit de gland de presse-étoupe (103) et qui s'étend en dehors de la base de gland de presse-étoupe (104), mais qui se termine avant de descendre complètement vers la base de gland de presse-étoupe (104), et un **joint torique (101)** qui est positionné à l'intérieur du canal (102) de sorte qu'il recouvre le tuyau échangeur (200) qui est positionné fixement à l'intérieur du canal (102) situé de manière couvrante au-dessus du tuyau échangeur (200) qui est positionné à l'intérieur du canal (102) et qui a une structure compatible avec la structure du canal (102) afin d'éviter toute fuite dans le système pouvant se produire en conséquence à une abrasion/perforation du tuyau échangeur (200) endommagé par un mouvement du gland et de son arbre et de tout autre facteur externe.
